(19) Europäisches Patentamt
European Patent Office
Office européen des brevets

(11) EP 4 471 091 A1

(12) **EUROPEAN PATENT APPLICATION**

(43) Date of publication:
**04.12.2024 Bulletin 2024/49**

(21) Application number: **23176292.3**

(22) Date of filing: **31.05.2023**

(51) International Patent Classification (IPC):
***C08L 71/12*** *(2006.01)*

(52) Cooperative Patent Classification (CPC):
(C-Sets available)
**C08L 71/12** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **SHPP Global Technologies B.V.**
**4612 PX Bergen op Zoom (NL)**

(72) Inventors:
- **Mao, Rui**
  **Shanghai, 201319 (CN)**
- **Song, Shijie**
  **Shanghai, 201319 (CN)**

(74) Representative: **Modiano, Gabriella Diana et al**
**Modiano & Partners SA**
**Steinsdorfstraße 14**
**80538 München (DE)**

(54) **POLYPHENYLENE ETHER COMPOSITION WITH IMPROVED DUCTILITY AND MOLDING PERFORMANCE**

(57) Disclosed herein are compositions comprising from about 20 wt. % to about 80 wt. % of a polyphenylene ether (PPE); from about 1 wt. % to about 30 wt. % of a polystyrene resin; and from about 0.01 wt. % to about 10 wt. % of a chemically reactive impact modifier. The combined weight percent value of all components does not exceed 100 wt. %, and all weight percent values are based on the total weight of the composition. The is resistant to bubble issue upon processing.

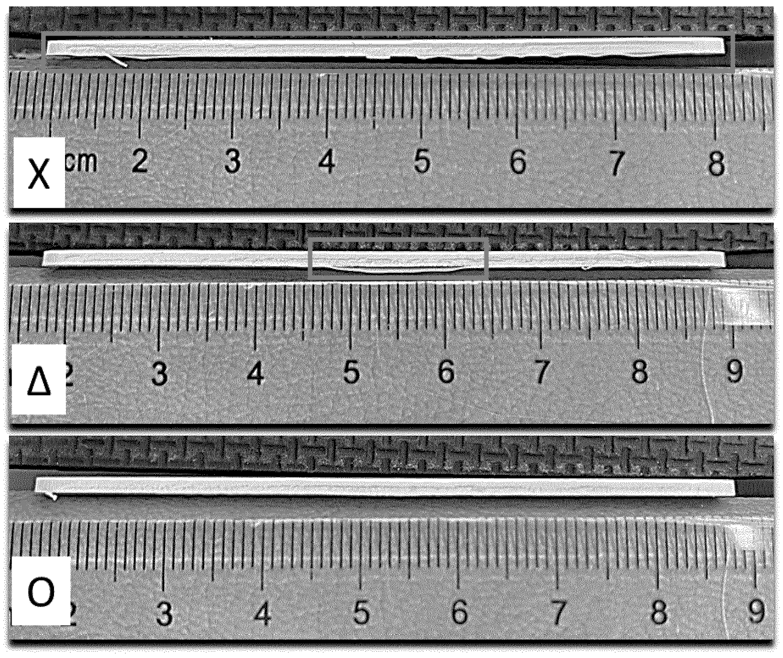


**FIG. 1**

EP 4 471 091 A1

(52) Cooperative Patent Classification (CPC): (Cont.)

C-Sets
**C08L 71/12, C08L 25/04, C08L 53/025;**
**C08L 71/12, C08L 25/06, C08L 53/025**

## Description

### FIELD OF THE DISCLOSURE

The present disclosure relates to materials comprising polyphenylene ether, and in particular to polyphenylene ether materials suitable for processing methods involving injection molding.

### BACKGROUND

Phase shifters are a critical component in base stations for networks and often comprise special engineering plastics with customized dielectric constant dK and low dissipation factor DF properties. Polyphenylene oxide (PPE) is a useful base resin to produce such engineering plastics because of its excellent dielectric properties. Conventionally, PPE together with different loading of ceramic fillers have been compounded to meet different phases shifter design. However, PPE may be plagued with certain processing disadvantages. PPE itself is very difficult for melt processing, and is often blended with polystyrene (PS) to get desired a melt flowability. Modem phase shifter designs require a customized Dk, and high melt flowability concurrently. Traditional compositions have not met such demanding requirements. Moreover, bubbling often occurs during processing such as injection molding thin and complex structures at high temperatures and speeds.

Accordingly, there remains a need in the art for materials that exhibit tunable dielectric constant (DK), ultra-low dielectric loss tangent (DF), ductility, strong mechanical properties and no or minimal bubbling during processing.

Aspects of the disclosure relate to thermoplastic compositions including: (a)from about 20 wt. % to about 80 wt. % of a polyphenylene ether (PPE); (b) from about 1 wt. % to about 30 wt. % of a polystyrene resin; and (c) from about 0.01 wt. % to about 15 wt. % of an impact modifier, wherein the impact modifier comprises a functionalized, styrene-based block copolymer wherein the combined weight percent value of all components does not exceed 100 wt. %, and all weight percent values are based on the total weight of the composition. The composition exhibits a notched Izod impact strength of at least 18 kJ/m2, when tested in accordance with ISO 180 and is resistant to bubbling.

### SUMMARY

The above-described and other deficiencies of the art are met by thermoplastic compositions comprising: (a) from about 20 wt. % to about 80 wt. % of a polyphenylene ether (PPE); (b) from about 1 wt. % to about 30 wt. % of a polystyrene resin; and (c) from about 0.01 wt. % to about 15 wt. % of an impact modifier, wherein the impact modifier comprises a functionalized, styrene-based block copolymer, wherein the combined weight percent value of all components does not exceed 100 wt. %, and all weight percent values are based on the total weight of the composition. The composition exhibits a notched Izod impact strength of at least 18 kJ/$m^2$, when tested in accordance with ISO 180 and is resistant to bubbling after processing.

The above described and other features are exemplified by the following detailed description, examples, and claims.

### BRIEF DESCRIPTION OF FIGURES

The accompanying figure, which is incorporated in and constitute a part of this specification, illustrate several aspects and together with the description service to explain the principles of the of the disclosure.

FIG. 1 is an image showing the testing parameters for evaluating an injection molded plaque for bubbling.

### DETAILED DESCRIPTION OF ILLUSTRATIVE EMBODIMENTS

The present disclosure may be understood more readily by reference to the following detailed description of desired embodiments and the examples included therein. In the following specification and the claims that follow, reference will be made to a number of terms which have the following meanings. Also, within the scope of the disclosure are articles of manufacture prepared according to any of the methods described herein. For example, articles that can be produced using the materials and methods of the disclosure include those in the electrical field, for example, computer, antenna and lighting articles.

Those skilled in the art recognize PPE for its good hydrolytic stability, high chemical resistance, good metallizability, good temperature resistance, and good dimensional stability, among other properties. These features are desirable in the production of a number of products including, but not limited to, exterior automotive parts, housing for wireless devices, and phase shifters for base stations. In base stations for 3G/4G/5G mobile wireless networks, a phase shifter is a critical component to alter direction of signals. The geometry of phase shifter tends to have high aspect ratio (long and thin)

and sometimes with complex structure. Thermoplastic materials for base stations generally require high ductility, heat resistance, flow ability, and low Df for less RF signal loss. The Dk values can be varied depending on different designs.

With the continued development of wireless connectivity developments related to for example '5G', the electric properties of PPE are additionally regarded as being an attractive feature; specifically, its favorable dielectric constants and dissipation factor, referred to as Dk/Df. However, one of the challenges faced with using PPE is its brittleness and diminished impact performance. Traditionally blends of PPE and polystyrene (PS), high impact PS and rubber additives are used; the resulting impact performance however is not on par with for example BPA-based polycarbonate. The geometry of phase shifter used in base station typically has a high aspect ratio (long and thin) and complex structure. PPE/PS/$TiO_2$ based thermoplastic materials, having good flowability, high HDT, low Df, and tunable Dk values, are used for this application depending on the concentration of $TiO_2$. Based on the high aspect ratio, the phase shifter requires improved ductility to prevent the fracture during manufacture. The desired ductility is conventionally achieved by the incorporation of an impact modifier usually compatible with PPE/PS resin. Still, polymer bubbling is often observed during injection molding processing and may be attributed to poor resin compatibility. Bubble issue is worse where the copolymer has high melt viscosity, for example, higher than 400 Pa·s, measured at 310°C & shear rate of $1000s^{-1}$ according to ISO11443. This may be attributed to resin phases of the block copolymer being easily elongated and coalesce under shear stress during processing.

European Patent Application EP EP4019590A1 discloses a high dielectric constant, high heat resistant polyphenylene oxide composition. The compositions comprise a first and second PPE, a general purpose polystyrene, an impact modifier, and an organic ceramic filler.

United States Patent US 10,557,035B2 discloses a resin composition for high frequency electronic components comprising a poly(arylene ether); a high impact polystyrene and general-purpose polystyrene; an impact modifier, and a ceramic filler.

United States Patent US 10,633,537B2 discloses thermoplastic compositions comprising a PPE resin, a polystyrene resin, an impact modifier, a dielectric filler, and an impact promoter comprising a polycarbonate-siloxane copolymer, a polyolefin-siloxane copolymer, or a combination thereof.

International Patent Application WO 2019186400A1 discloses dielectric thermoplastic compositions comprising a polyarylene ether, a polypropylene, a polystyrene, an impact modifier, a thermally conductive filler, a dielectric ceramic filler.

Compositions according to aspects of the disclosure have improved properties as compared to conventional PPE compositions. Improved properties include, but are not limited to, ductility and impact strength. Furthermore, the compositions are also bubbling resistant, that is they exhibit none or less bubbling as compared to conventional or reference compositions.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting. Various combinations of elements of this disclosure are encompassed by this disclosure, for example, combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including matters of logic with respect to arrangement of steps or operational flow; plain meaning derived from grammatical organization or punctuation; and the number or type of embodiments described in the specification.

### *Thermoplastic Composition*

The disclosed compositions combine poly(phenylene ether), a polystyrene resin, and a chemically reactive impact modifier comprising a styrenic block copolymer grafted with at least one functional group. The disclosed compositions exhibit improved ductility and impact strength, as well as improved bubble or bubbling performance.

Aspects of the disclosure relate to thermoplastic compositions including: (a)from about 20 wt. % to about 80 wt. % of a polyphenylene ether (PPE); (b) from about 1 wt. % to about 30 wt. % of a polystyrene resin; and (c) from about 0.01 wt. % to about 15 wt. % of an impact modifier, wherein the impact modifier is a functionalized styrenic block copolymer or a styrenic block copolymer grafted with at least one functional groupwherein the combined weight percent value of all components does not exceed 100 wt. %, and all weight percent values are based on the total weight of the composition. The composition exhibits a notched Izod impact strength of at least 18 $kJ/m^2$, when tested in accordance with ISO 180 and is resistant to bubbling.

The PPE resin may be a high molecular weight polymer based on polyphenylene ether (PPE), and is used to improve properties such as heat distortion temperature (HDT) and creep resistance. PPE may also be referred to by its chemical name poly (2,6-dimethyl-,1,4-phenylene ether). Suitable examples of PPE resins are available from SABIC and include the NORYL™ family of PPE resins.

In some aspects, the impact modifier comprises a functionalized, styrene-based block copolymer. In specific examples, the styrene-based block copolymer includes styrene-ethylene-butylene-styrene (SEBS), styrene-butadiene-styrene (SBS). Other suitable styrene-based block copolymers may comprise, styrene-ethylene-propylene-styrene (SEPS), styrene-[ethylene-(ethylene-propylene)]-styrene (SEEPS), or combinations thereof. In other examples, the ethylene or propylene-based homo- or copolymer includes ethylene, propylene, ethylene-methylacrylate (E-MA), ethylene-butylacrylate (E-BA), ethylene-propylene (EP), ethylene-ethylacrylate (EA), ethylene-vinylacetate (E-VA), or combination thereof. The composition may include from about 1 wt% to about 15 wt% of the impact modifier comprising a styrene-based block copolymer. In yet further aspects, the chemically reactive impact modifier may further comprise a functionalized, ethylene or propylene-based homo- or copolymer, or a combination thereof.

Compositions according to aspects of the disclosure have improved properties as compared to conventional PPE compositions. Improved properties include, but are not limited to, ductility and impact strength. Furthermore, the compositions are also bubble issue resistant, that is they exhibit no or less bubbling as compared to conventional or reference compositions in the absence of the chemically reactive impact modifier.

In certain aspects the composition has a notched Izod impact strength of at least 18 kilojoules per meter ($KJ/m^2$) as determined in accordance with ISO 180. In some aspects the composition has a notched Izod impact strength of at least 12 $KJ/m^2$, or at 15 least $KJ/m^2$, or at least 18 $KJ/m^2$, or at least 20 $KJ/m^2$, or at least 22 $KJ/m^2$,or from 10-30 $KJ/m^2$, or from 15-30 $KJ/m^2$, or from 15-50 $KJ/m^2$. The observed impact strength may correspond to a desired ductility for the applications described herein.

In particular aspects an injection molded plaque comprising the composition is resistant to resin bubbling or exhibits little or no observable bubble. Bubbling may be evaluated by forming an injection molded sample of the composition, removing the sample from the mold, and observing the extent of separation at the surface of the molded sample. Samples may exhibit bubbling along a whole side of the surface, bubbling limited to a narrow region of the side, or no bubbling.

***Polyphenylene Oxide***

In various aspects, the disclosed composition may comprise a poly(arylene) ether. The term poly(arylene ether) polymer includes polyphenylene ether (PPE) and poly(arylene ether)copolymers; graft copolymers; poly(arylene ether) ionomers; and block copolymers of alkenyl aromatic compounds with poly(arylene ether)s, vinyl aromatic compounds, and poly(arylene ether), and the like; and combinations including at least one of the foregoing. Poly(arylene ether) polymers per se, are polymers including a plurality of polymer precursors having structural units of the formula (I):

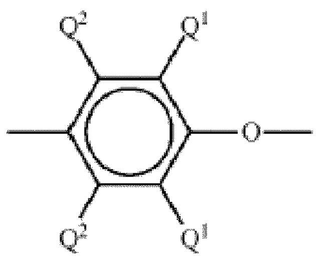

(I)

wherein for each structural unit, each $Q^1$ is independently hydrogen, halogen, primary or secondary lower alkyl (e.g., alkyl containing up to 7 carbon atoms), phenyl, haloalkyl, aminoalkyl, hydrocarbonoxy, halohydrocarbonoxy wherein at least two carbon atoms separate the halogen and oxygen atoms, or the like; and each $Q^2$ is independently hydrogen, halogen, primary or secondary lower alkyl, phenyl, haloalkyl, hydrocarbonoxy, halohydrocarbonoxy wherein at least two carbon atoms separate the halogen and oxygen atoms, or the like. Preferably, each $Q^1$ is alkyl or phenyl, especially C14 alkyl, and each $Q^2$ is hydrogen.

Both homopolymer and copolymer poly(arylene ether)s are included. The preferred homopolymers are those containing 2,6-dimethylphenylene ether units. Suitable copolymers include random copolymers containing, for example, such units in combination with 2,3,6-trimethyl-1,4-phenylene ether units or copolymers derived from copolymerization of 2,6-dimethylphenol with 2,3,6-trimethylphenol. Also included are poly(arylene ether) containing moieties prepared by grafting vinyl monomers or polymers such as polystyrenes, as well as coupled poly(arylene ether) in which coupling agents such as low molecular weight polycarbonates, quinones, heterocycles and formals undergo reaction with the hydroxy

groups of two poly(arylene ether) chains to produce a higher molecular weight polymer. Poly(arylene ether)s further include combinations including at least one of the above.

The poly(arylene ether) may have a number average molecular weight of about 3,000 grams per mole (g/mol) to about 30,000 g/mol and a weight average molecular weight of about 30,000 to about 60,000 g/mol, as determined by gel permeation chromatography. The poly(arylene ether) can have an intrinsic viscosity of 0.30 to 0.50 deciliters per gram (dL/g), or 0.4 to 0.46 dL/g, or from 0.3 dl/g to 0.42 dl/g, as measured in chloroform at 25°C. It is also possible to utilize a combination of two or more poly(arylene ether) components that respectively have different intrinsic viscosities. Determining an exact ratio, when two intrinsic viscosities are used, will depend somewhat on the exact intrinsic viscosities of the poly(arylene ether) used and the ultimate physical properties that are desired.

In various aspects of the present disclosure, the composition may comprise a- poly(p-phenylene oxide). In various aspects, the disclosed composition may comprise a polyphenylene ether such as polyphenylene oxide (a "poly(p-phenylene oxide") PPE. PPE may describe polymers containing optionally substituted phenyl rings linked with oxygen (O) and can be used interchangeably with poly(p-phenylene ether) or poly (2,6 dimethyl-p-phenylene oxide). Further, the disclosed composition may comprise a specific combination of PPE resins. The polyphenylene oxide may be present as a polyphenylene oxide resin. In further aspects, the polyphenylene oxide may be present as a polyphenylene oxide copolymer. In yet further aspects, the polyphenylene oxide may comprise or may further comprise a poly(phenylene ether) siloxane copolymer. The PPE resin may have a weight average molecular weight (Mw) from about 20,000 to 80,000 Daltons.

PPE may describe polymers containing optionally substituted phenyl rings linked with oxygen (O) and can be used interchangeably with poly(p-phenylene ether) or poly (2,6 dimethyl-p-phenylene oxide). Further, the disclosed composition may comprise a combination of PPE resins that provide the composition with a balance of certain properties. The polyphenylene oxide may be present as a polyphenylene oxide resin. In further aspects, the polyphenylene oxide may be present as a polyphenylene oxide copolymer.

Certain aspects of the composition include from about 20 wt. % to about 80 wt. % of a poly(phenylene ether)resin, or from about 35 wt. % to about 90 wt. % of a poly(phenylene ether)resin, or from about 40 wt. % to about 80 wt. % of a poly(phenylene ether)resin. In various aspects, the composition comprises a blend of poly(phenylene ether) resins, such as a blend of suitable PPE resins. Certain aspects of the composition include from greater than 20 wt. % to about 80 wt. % of a polyphenylene oxide or a polyphenylene oxide copolymer. PPE may be present in the disclosed compositions in an amount of about 40 wt. % % to about 80 wt. % based on the total weight of the composition. For example, PPE may be present in the amount of 21 wt. % to 80 wt. %, 25 wt. % to 70 wt. %, 28 wt. % to 70 wt.%, or 20 wt. % to 75 wt. %, 30 wt. % to 80 wt. %, 32 wt. % to 75 wt. %, 35 wt. % to 80 wt. %, or a combination of ranges with endpoints between 20 wt. % and 80 wt. %.

***Polystyrene***

In various aspects, the disclosed composition may comprise a polystyrene polymer. The term "polystyrene" as used herein includes polymers prepared by bulk, suspension and emulsion polymerization, which contain at least 25% by weight of polymer precursors having structural units derived from a monomer of the formula (I):

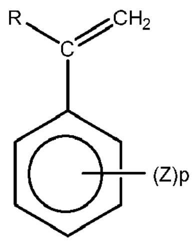

(I)

wherein R is hydrogen, lower alkyl or halogen; Z is vinyl, halogen or lower alkyl; and p is from 0 to about 5. Polystyrenes are generally miscible with polyphenylene ether. In certain aspects, the composition may comprise a general purpose polystyrene. The present composition may comprise from about 1 wt. % to about 30 wt. % of a polystyrene such as a general purpose polystyrene polymer In further aspects the polystyrene may comprise a polystyrene in an amount of from about 2 wt. % to about 30 wt. %, from about 2 wt. % to about 25 wt. %, from about 2 wt. % to about 20 wt. %, from about 3 wt. % to about 20 wt. %, from about 3 wt. % to about 20 wt. %, from about 3 wt. % to about 15 wt. %, from about 5 wt. % to about 30 wt. %, from about 5 wt. % to about 25 wt. %, or from about 5 wt. % to about 20 wt. %, or from about 5 wt. % to about 12 wt. %. In various aspects, the composition comprises at least 2 wt. %, at least 3 wt. %, at least 4 wt. %, or at least 5 wt. % of a polystyrene.

Polystyrene components of the present compositions may include a high-impact polystyrene (HIPS) or a general purpose polystyrene (GPPS), provided that the HIPS, the GPPS, or the combination thereof represents 1 to 30 % by weight

of the respective compositions. In any of aspects, GPPS may also be present, subject to the general limitation that the total weight percentage of HIPS + GPPS is 1-30% by weight of a given composition.

***Impact Modifier***

The compositions of the present disclosure may comprise an impact modifier. The impact modifier can be a chemically reactive impact modifier. By definition, a chemically reactive impact modifier can have at least one reactive group such that when the impact modifier is added to a polymer composition, the impact properties of the composition (expressed in the values of the Izod impact) are improved. In some examples, the chemically reactive impact modifier may be an ethylene or propylene-based homo- or copolymer with reactive functional groups selected from, but not limited to, anhydride, carboxyl, hydroxyl, and epoxy. In other examples, the chemically reactive impact modifier can be a unhydrogenated or hydrogenated styrenic block copolymer grafted with reactive functional groups including, but not limited to, anhydride, carboxyl, hydroxyl, and epoxy.

In further aspects of the present disclosure, the composition can comprise a rubbery impact modifier. The rubber impact modifier can be a polymeric material which, at room temperature, is capable of recovering substantially in shape and size after removal of a force. However, the rubbery impact modifier should typically have a glass transition temperature of less than 0° C. In certain aspects, the glass transition temperature (Tg) can be less than -5° C, -10° C, -15° C, with a Tg of less than -30° C typically providing better performance. Representative rubbery impact modifiers can include, for example, functionalized polyolefin ethylene-acrylate terpolymers, such as ethylene-acrylic esters-maleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain functional moieties which are grafted onto the polymer in a post polymerization step.

In various aspects, the chemically reactive impact modifier comprises a block copolymer grafted with at least one functional group. These functional groups may include, but are not limited to, carboxylic acid, anhydride, glycidyl group and their derivatives. In certain aspects, the impact modifier comprises a styrenic block copolymer. For example, the block copolymer may comprise a styrene-based block copolymer such as a styrene-butadiene-styrene (SBS) copolymer, styrene-ethylene-butadiene-styrene (SEBS) copolymer, styrene-isoprene-styrene (SIS) copolymer, styrene ethylene-propylene-styrene (SEPS) copolymer, or styrene-[ethylene-(ethylene-propylene)]-styrene (SEEPS) or a combination thereof.

In a specific example, the chemically reactive impact modifier comprises a maleic anhydride grafted SEBS copolymer (MAH-g-SEBS).

In certain aspects, the impact modifier has a sufficiently low molecular weight. For example, the impact modifier may exhibit a melt viscosity of less than 100 Pa·s when measured in accordance with ISO11443 at the temperature of 310°C, and shear rate of 1000 $s^{-1}$.

As noted above, in certain examples the resin composite disclosed herein includes from 0.01 wt. % to 15 wt. %, or from about 0.1 wt. % to about 15 wt. % of the impact modifier or chemically reactive impact modifier. In other examples, the resin composite includes from 0.1 wt. % to 12 wt. % of the impact modifier or chemically reactive impact modifier, or from 0.1 wt. % to 10 wt. % of the impact modifier or chemically reactive impact modifier, the resin composite includes from about 0.1 wt. % to about 8 wt. % of the impact modifier or chemically reactive impact modifier, or from about 2 wt. % to about 12 wt. % of the impact modifier or chemically reactive impact modifier, or from about 3 wt. % to about 10 wt. % of the impact modifier or chemically reactive impact modifier, or from about 2 wt. % to about 10 wt. % of the impact modifier or chemically reactive impact modifier, or even from about 2 wt. % to about 8 wt. % of the impact modifier or chemically reactive impact modifier.

***Additives***

The composition can include various additives ordinarily incorporated into polymer compositions of this type, with the proviso that the additive(s) are selected so as to not significantly adversely affect the desired properties of the thermoplastic composition (good compatibility for example). Such additives can be mixed at a suitable time during the mixing of the components for forming the composition. The total amount of all of the additives in the resin composition can be, for example, 0.001 to 12 wt% each based on the total weight of the composition. Suitable additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof.

According to certain aspects, the polymer compositions may maintain mechanical performance and dielectric strength even with high levels of fillers (for example, greater than 30 wt. % filler based on the total weight of the polymer composition).

The composite disclosed herein can comprise one or more additional fillers. The filler can be selected to impart

additional impact strength and/or provide additional characteristics that can be based on the final selected characteristics of the polymer composition. In certain aspects, the composite may comprise a glass fiber filler. In yet further aspects, the composite may be free or substantially free of a glass filler.

Additional appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated, or surface treated, with silanes for example, to improve adhesion and dispersion with the polymer matrix. Fillers generally can be used in amounts of 1 to 200 parts by weight, based on 100 parts by weight of based on 100 parts by weight of the total composition.

In specific aspects, the additive may comprise an inorganic filler such as titanium dioxide, a titanate, or a combination thereof. As an example, the composition may comprise from about 0.01 wt. % to about 50 wt. %, or from about 0.01 wt. % to about 30 wt. %, or from about 1 wt. % to about 30 wt. %, or from 0.01 wt. % to 20 wt. %, or from about 0.05 wt. % to about 50 wt. %, or from about 0.05 wt. % to about 30 wt. %, or from about 0.05 wt. % to about 45 wt. %, or from about 0.1 wt. % to about 50 wt. %, or from about 0.5 wt. % to about 20 wt. %, or from about 5 wt. % to about 20 wt. %, or from about 5 wt. % to about 50 wt. %, or from about 5 wt. % to about 30 wt. % of a titanium oxide, a titanate, or a combination thereof.

The additive composition can include a flow modifier, reinforcing agent, antioxidant, heat stabilizer, light stabilizer, ultraviolet light stabilizer, ultraviolet absorbing additive, plasticizer, lubricant, release agent, antistatic agent, anti-fog agent, antimicrobial agent, chain extender, colorant, de-molding agents, flow promoter, flow modifier, surface effect additive, radiation stabilizer, flame retardant, anti-drip agent, or any combination thereof.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations comprising at least one of the foregoing heat stabilizers. The heat stabilizer can be tris(2,4-di-t-butylphenyl) phosphate available as IRGAPHOS™ 168. Heat stabilizers are generally used in amounts of 0.01 to 5 wt%, based on the total weight of polymer in the composition.

There is considerable overlap among plasticizers, lubricants, and mold release agents, which include, for example, glycerol tristearate (GTS), phthalic acid esters (e.g., octyl-4,5-epoxy-hexahydrophthalate), tris-(octoxycarbonylethyl)isocyanurate, tristearin, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); esters, for example, fatty acid esters (e.g., alkyl stearyl esters, such as, methyl stearate, stearyl stearate, and the like), waxes (e.g., beeswax, montan wax, paraffin wax, or the like), or combinations comprising at least one of the foregoing plasticizers, lubricants, and mold release agents. These are generally used in amounts of 0.01 to 5 wt%, based on the total weight of the polymer in the composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4- phenylene)bis(4H-3,1-benzoxazin-4-one, commercially available under the trade name CYASORB™ UV-3638 from Cytec Industries Inc., Woodland, NJ), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB™ 5411 from Cytec Industries Inc., Woodland, NJ) or combinations comprising at least one of the foregoing light stabilizers. The UV stabilizers can be present in an amount of 0.01 to 1 wt%, specifically, 0.1 to 0.5 wt%, and more specifically, 0.15 to 0.4 wt%, based upon the total weight of polymer in the composition.

Antioxidant additives include organophosphites such as tris(nonyl phenyl)phosphite, tris(2,4-di-t-butylphenyl) phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as

distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01 to 0.1 parts by weight, based on 100 parts by weight of the total composition, excluding any filler.

Useful flame retardants include organic compounds that include phosphorus, bromine, and/or chlorine. Non-brominated and non-chlorinated phosphorus-containing flame retardants can be preferred in certain applications for regulatory reasons, for example organic phosphates and organic compounds containing phosphorus-nitrogen bonds.

Inorganic flame retardants can also be used, for example salts of C1-16 alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as $Na_2CO_3$, $K_2CO_3$, $MgCO_3$, $CaCO_3$, and $BaCO_3$, or fluoro-anion complexes such as $Li_3AlF_6$, $BaSiF_6$, $KBF_4$, $K_3AlF_6$, $KAlF_4$, $K_2SiF_6$, and/or $Na_3AlF_6$. When present, inorganic flame retardant salts are present in amounts of 0.01 to 10 parts by weight, more specifically 0.02 to 1 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. A TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Antidrip agents can be used in amounts of 0.1 to 10 parts by weight, based on 100 parts by weight of the total composition, excluding any filler.

The compositions may be formed by techniques known to those skilled in the art. Extrusion and mixing techniques, for example, may be utilized to combine the components of the resin composition.

The resin compositions of the present disclosure can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 230 °C and about 350 °C in the molten resin composition, although higher temperatures can be used provided that the residence time of the resin in the processing equipment is kept short. In some aspects, the melt processed composition exits processing equipment such as an extruder through small exit holes in a die. The resulting strands of molten resin are cooled by passing the strands through a water bath. The cooled strands can be chopped into small pellets for packaging and further handling.

Compositions may be manufactured by various methods, including batch or continuous techniques that employ kneaders, extruders, mixers, and the like. For example, the composition can be formed as a melt blend employing a twin-screw extruder. In some aspects at least some of the components are added sequentially. For example, the poly(arylene ether) component, the polystyrene component(s), and the impact modifier component can be added to the extruder at the feed throat or in feeding sections adjacent to the feed throat, or in feeding sections adjacent to the feed throat, while the filler component can be added to the extruder in a subsequent feeding section downstream. Alternatively, the sequential addition of the components may be accomplished through multiple extrusions. A composition may be made by preextrusion of selected components, such as the poly(arylene ether) component, the polystyrene component(s), and the impact modifier component to produce a pelletized mixture. A second extrusion can then be employed to combine the preextruded components with the remaining components. The filler component can be added as part of a masterbatch or directly. The extruder can be a two lobe or three lobe twin screw extruder.

In one aspect, the present disclosure pertains to plastic components, for example, that have been shaped, formed, or molded at least in part from the compositions described herein. Also provided are plastic components comprising a resin composition that is formed according to the presently disclosed methods for forming a resin composition.

*Properties and Articles*

The disclosed compositions comprising PPE, PS, and a chemically reactive impact modifier may exhibit improved ductility and resistance to bubble issue or bubbling, while maintaining desirable dielectric properties, when compared to conventional PPE compositions. In certain aspects, the disclosed composites may exhibit good ductility. A sample of the composition may exhibit a notched Izod impact strength of at least 18 $kJ/m^2$, when tested in accordance with ISO 180.

Compositions of the present disclosure also exhibit resistance to bubbling during processing. The compositions exhibit little or no cracking, breaking, or separation along a region of an injection molded sample when removed from the

mold.

The disclosed compositions further exhibit high heat resistance, high flowability, and improved ductility. The compositions may exhibit a high heat resistance characterized by a heat deflection temperature of greater than 160 °C at 0.45 megapascals (MPa), when tested in accordance with ISO 75. Further, the compositions may exhibit improved ductility which may be characterized by a notched Izod impact strength greater than 15 KJ/$m^2$, greater than 18 KJ/$m^2$ when tested in accordance with ISO 180.

In various aspects, the present disclosure relates to articles comprising the compositions herein. The compositions can be molded into useful shaped articles by a variety of means such as injection molding, extrusion, rotational molding, blow molding, and thermoforming to form articles. The compositions can be useful in the manufacture of articles requiring materials with good flow, good impact strength, and good dielectric strength. The compositions may be useful for as well as electrically conducting materials.

In various aspects, the present disclosure provides compositions useful for the manufacture of phase shifters for mobile network base stations. Given the properties of the disclosed compositions herein, these materials may provide desirable components for the high aspect ratio, complex structures for base station phase shifters. The disclosed materials maintain the dielectric properties of conventional PPE, such as dissipation factor Df, among others, at frequencies from about 10 GHz and 120 GHz while providing bubbling resistance. The disclosed compositions may be useful as a dielectric plate for a phase shifter for a 5G base station.

The advantageous characteristics of the compositions disclosed herein make them appropriate for an array of uses.

**Methods of Manufacture**

Aspects of the disclosure further relate to methods for making a thermoplastic composition. The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy. The barrel temperature on the extruder during compounding can be set at the temperature where at least a portion of the polymer has reached a temperature greater than or equal to about the melting temperature, if the resin is a semi-crystalline organic polymer, or the flow point (for example, the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

Methods may further comprise processing the composite to provide a plaque of a desired thickness. Plaques can be extruded, injection molded, compression molded, or injection-compression molded, and may have a thickness between about 0.4 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composite.

Various combinations of elements of this disclosure are encompassed by this disclosure, for example, combinations of elements from dependent claims that depend upon the same independent claim.

## Definitions

It is also to be understood that the terminology used herein is for the purpose of describing particular aspects only and is not intended to be limiting. As used in the specification and in the claims, the term "comprising" can include the embodiments "consisting of" and "consisting essentially of." Unless defined otherwise, all technical and scientific terms used herein have the same meaning as commonly understood by one of ordinary skill in the art to which this disclosure belongs. In this specification and in the claims, which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding aspects to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, for example, polycarbonate polymers, by methods well known to a person having ordinary skill in the art using molecular weight standards, *e.g.*, polycarbonate standards or polystyrene standards, preferably certified or traceable molecular weight standards.

As used herein, the terms "weight average molecular weight" or "Mw" can be used interchangeably, and are defined by the formula:

$$M_w = \frac{\sum N_i {M_i}^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, for example, polycarbonate polymers, by methods well known to a person having ordinary skill in the art using molecular weight standards, for example, polycarbonate standards or polystyrene standards, preferably certified or traceable molecular weight standards.

As used herein, degree of polymerization, n, may describe the number of monomeric units (or repeating units) in a given polymer molecule.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

In one aspect, "substantially free of" can be less than about 0.5 weight percent (wt.%). In another aspect, substantially free of can be less than about 0.1 wt.%. In another aspect, substantially free of can be less than about 0.01 wt.%. In yet another aspect, substantially free of can be less than about 100 ppm. In yet another aspect, substantially free can refer to an amount, if present at all, below a detectable level. In one aspect, the compositions of the present disclosure are free of or substantially free of carbon filler or carbon-based filler.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Aspects of the Disclosure

In various aspects, the present disclosure pertains to and includes at least the following aspects.

Aspect 1. A thermoplastic composition comprising: from about 20 wt. % to about 80 wt. % of a polyphenylene ether (PPE); from about 1 wt. % to about 30 wt. % of a polystyrene resin; and from about 0.01 wt. % to about 10 wt. % of a chemically reactive impact modifier; wherein the combined weight percent value of all components does not exceed 100 wt. %, and all weight percent values are based on the total weight of the composition, and wherein the composition is resistant to bubbling.

Aspect 2. The thermoplastic composition of aspect 1, wherein the composition further comprises a titanium oxide, a titanate, or a combination thereof.

Aspect 3. The thermoplastic composition of aspect 1, wherein the composition further comprises from about 0.01 wt. % to about 50 wt. % of a titanium oxide, a titanate, or a combination thereof.

Aspect 4. The thermoplastic composition of any one of aspects 1-3, comprising from about 2 wt. % to about 10 wt. % of the impact modifier.

Aspect 5. The thermoplastic composition of any one of aspects 1-4, wherein the composition comprises from greater than 40 wt. % to about 80 wt. % of the PPE.

Aspect 6. The thermoplastic composition of any one of aspects 1-5, wherein the PPE comprises poly(2,6-dimethyl-1,4-phenylene ether).

Aspect 7A. The thermoplastic composition of any one of aspects 1-6, wherein the PPE has an intrinsic viscosity of about 0.3 dl/g to 0.5 dl/g when determined at about 25 °C in chloroform using a viscometer.

Aspect 7B. The thermoplastic composition of any one of claims 1-6, wherein the PPE has an intrinsic viscosity of about 0.3 dl/g to 0.42 dl/g when determined at about 25 °C in chloroform using a viscometer.

Aspect 8. The thermoplastic composition according to any one of aspects 1-7B, wherein the polystyrene resin is a general purpose polystyrene or high impact polystyrene.

Aspect 9. The thermoplastic composition of any one of aspects 1-8, wherein chemically reactive impact modifier comprises a styrenic block copolymer grafted with at least one functional group.

Aspect 10. The thermoplastic composition of aspect 9, wherein the at least one functional group comprises a carboxylic acid, acid anhydride, glycidyl group, or a derivative thereof, grafted to the at least one block copolymer.

Aspect 11. The thermoplastic composition of aspect 9, wherein the unhydrogenated or hydrogenated block copolymer comprises a styrene-butadiene-styrene (SBS) copolymer, styrene-ethylene-butylene-styrene (SEBS) copolymer, styrene-isoprene-styrene (SIS) copolymer, styrene-ethylene-propylene-styrene (SEPS) copolymer, or a styrene-[ethylene-(ethylene-propylene)]-styrene (SEEPS) copolymer.

Aspect 12. The thermoplastic composition of any one of aspects 1-11, wherein the chemically reactive impact modifier comprises maleic anhydride grafted SEBS (MAH-g-SEBS).

Aspect 13. The thermoplastic composition of any one of aspects 1-12, wherein the chemically reactive impact modifier has a melt viscosity of less than 100 Pa·s when measured in accordance with ISO11443 at a temperature of 310°C, and shear rate of $1000s^{-1}$.

Aspect 14. The thermoplastic composition according to any one of aspects 1-13, wherein the thermoplastic composition further comprises at least one additional additive, wherein the at least one additional additive comprises an acid scavenger, anti-drip agent, antioxidant, antistatic agent, chain extender, colorant, de-molding agent, flow promoter, lubricant, mold release agent, plasticizer, quenching agent, flame retardant, UV reflecting additive, or a combination thereof.

Aspect 15. The thermoplastic composition according to any one of aspects 1-14, wherein the composition exhibits a notched Izod impact strength of at least 18 $kJ/m^2$, when tested in accordance with ISO 180.

Aspect 16. The thermoplastic composition according to any one of aspects 1-14, wherein the composition exhibits a notched Izod impact strength of at least 18 $kJ/m^2$, when tested in accordance with ISO 180 and wherein the PPE has an intrinsic viscosity of about 0.3 dl/g to 0.42 dl/g when determined at about 25 °C in chloroform using a viscometer.

Aspect 16. An article formed from a composition, wherein the article is a component of a phase shifter for a base station, and the thermoplastic composition comprises: from about 20 wt. % to about 80 wt. % of a polyphenylene ether (PPE); from about 1 wt. % to about 30 wt. % of a polystyrene resin; and from about 0.01 wt. % to about 10 wt. % of a chemically reactive impact modifier; wherein the combined weight percent value of all components does not exceed 100 wt. %, and all weight percent values are based on the total weight of the composition, and wherein the composition is resistant to bubbling.

Aspect 17. The article of aspect 16, wherein the composition exhibits a notched Izod impact strength of at least 18 $kJ/m^2$, when tested in accordance with ISO 180.

Aspect 18. The article of aspect 16, wherein the chemically reactive impact modifier comprises MAH-g-SEBS.

## EXAMPLES

The following examples are put forth so as to provide those of ordinary skill in the art with a complete disclosure and description of how the compounds, compositions, articles, devices and/or methods claimed herein are made and evaluated and are intended to be purely exemplary and are not intended to limit the disclosure. Efforts have been made to ensure accuracy with respect to numbers (for example, amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, for example, component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

Various PPE resins were prepared from the raw materials presented in Table 1.

Table 1. Materials

| Component | Description | CAS number | Product supplier |
|---|---|---|---|
| PPE1 | Poly(2,6-dimethyl-1,4-phenylene ether), having an intrinsic viscosity of 0.4 deciliter/gram, determined at 25 °C in chloroform by Ubbelohde viscometer. | 25134-01-4 | SABIC |
| PPE2 | Poly(2,6-dimethyl-1,4-phenylene ether), having an intrinsic viscosity of 0.46 deciliter/gram, determined at 25 °C in chloroform by Ubbelohde viscometer. | 25134-01-4 | SABIC |
| GPPS | STYRON 680A, General purpose polystyrene | 9003-53-6 | Trinseo |
| IM1 | SEBS G1651, Polystyrene-poly(ethylene/butylene)-polystyrene triblock copolymer, having a polystyrene content of 33 wt%, Melt viscosity: 422 Pa·s | 66070-58-4 | Kraton |
| IM2 | SEBS A1535, Polystyrene-poly(ethylene/butylene)-polystyrene triblock copolymer, having a polystyrene content of 57 wt%, Melt viscosity: 176 Pa·s | 66070-58-4 | Kraton |
| IM3 | SEBS A1536, Polystyrene-poly(ethylene/butylene)-polystyrene triblock copolymer, having a polystyrene content of 42 wt%, Melt viscosity: 120 Pa·s | 66070-58-4 | Kraton |
| IM4 | SEBS G1652, Polystyrene-poly(ethylene/butylene)-polystyrene triblock copolymer, having a polystyrene content of 30 wt%, Melt viscosity: 63 Pa·s | 66070-58-4 | Kraton |
| MAH-IM5 | SEBS FG1901, Maleic anhydride grafted polystyrene-poly(ethylene/butylene)-polystyrene triblock copolymer, having a polystyrene content of 30 wt%, Melt viscosity: 32 Pa·s | 66070-58-4 | Kraton |
| $TiO_2$ | Titanium dioxide | 13463-67-7 | Chemours |
| Additives | One or more of acid scavengers, metal deactivators, stabilizers, and mold release agents. | | |

Formulations were prepared by extruding the pre-blended components using a twin extruder. Pellets were compounded using a Toshiba™ TEM-37BS Twin Screw Extruder co-rotating twin screw extruder. Compounding profiles are shown in Table 2.

**Table 2.** Temperature profiles for compounding

| Compounder Type | \ | TEM-37BS |
|---|---|---|
| Zone 1 temperature | °C | 50 |
| Zone 2 temperature | °C | 150 |
| Zone 3 temperature | °C | 280 |
| Zone 4 temperature | °C | 280 |
| Zone 5 temperature | °C | 280 |
| Zone 6 temperature | °C | 280 |
| Zone 7 temperature | °C | 290 |
| Zone 8 temperature | °C | 290 |
| Zone 9 temperature | °C | 290 |

(continued)

| Compounder Type | \ | TEM-37BS |
|---|---|---|
| Zone 10 temperature | °C | 290 |
| Zone 11 temperature | °C | 290 |
| Zone 12 temperature | °C | 290 |
| Die temperature | °C | 290 |

Injection molding conditions are shown in Table 3. Injection was performed on Sumitomo DEMAG SE180EV molding machine for plaques and FANUC S-2000i 100A molding machine for bars for tensile/impact/HDT tests.

Table 3. Specimen injection molding conditions.

| Molding parameters | unit | Value |
|---|---|---|
| Pre-drying time | Hour | 4 |
| Pre-drying temperature | °C | 120 |
| Zone 1 temperature | °C | 280-290 |
| Zone 2 temperature | °C | 290-300 |
| Zone 3 temperature | °C | 300-310 |
| Nozzle temperature | °C | 300-310 |
| Mold temperature | °C | 120 |

The melt viscosity of polystyrene-poly(ethylene/butylene)-polystyrene triblock copolymer in Table 1 were measured at 310°C and shear rate of 1000 s-1 in accordance with ISO11443. Formulations were evaluated for the following properties: melt flow rate (MFR) and melt flow volume rate (MVR) at 300 °C, 5 kilogram load, according to ASTM D1238 and ISO1133, respectively; tensile testing at a speed of 5 mm/min for filled examples in Table 4 and 50 mm/min for unfilled examples in Table 6, according to ISO 527; notched Izod impact, according to ISO 180; heat distortion temperature (HDT) at 0.45 Mpa on 4 mm thick bars, according to ISO 75;dielectric constant dk/ dielectric loss df, measured on 75 × 75 × 2.5 mm plaques at 1.9 GHz, using SABIC internal method with QWED split post dielectric resonator and Agilent PNA network analyzer. The bubbling phenomena was evaluated based on injection molded plaques having a size of 75 × 75 × 1.5 mm for filled examples in Table 4 and a thickness of 0.5mm for unfilled examples in Table 6. The severity of bubble issue was categorized according to the indicators ×, Δ, and O as shown in FIG. 1 showing a lateral view of the molded plaques. An × indicator corresponded to significant areas or multiple lengths of bubble along the molded part; Δ corresponded to a localized single area or length of bubble along the molded part; and O indicated no or no significant areas or lengths of bubble along the molded part.

Table 4 presents the formulations.

Table 4. Formulations and physical properties

| | **C.Ex.1** | **C.Ex.2** | **C.Ex.3** | **C.Ex.4** | **Ex.1** | **Ex.2** | **Ex.3** |
|---|---|---|---|---|---|---|---|
| PPE1 | 63.7 | 63.7 | 63.7 | 63.7 | 63.7 | 63.7 | 63.7 |
| $TiO_2$ | 17 | 17 | 17 | 17 | 17 | 17 | 17 |
| IM2 | 8 | | | | | | |
| IM3 | | 8 | | | | | |
| IM4 | | | 8 | 6 | | 6 | 4 |
| MAH-IM5 | | | | | 4 | 2 | 4 |
| IM1 | | | | | 4 | | |
| GPPS | 10 | 10 | 10 | 11 | 10 | 10 | 10 |
| Additives | 1.3 | 1.3 | 1.3 | 1.3 | 1.3 | 1.3 | 1.3 |

Table 5 shows the properties observed for the respective formulations. Ex.1-3 included MAH-g-SEBS and showed no bubbling. Particularly, Ex.2-3 showed very high impact strength with MAH-IM5 and low melt viscosity IM4. C.Ex.1-2 and C.Ex.4 showed low impact strength and bubbling. Particularly, C.Ex.4 included less SEBS, but the bubbling was still not solved. C.Ex.3 showed improved impact strength, but not as high as Ex.2-3, and still suffered from bubbling.

Without wishing to be bound by any particular theory, Ex.1-3 exhibited no bubbling because of the addition of MAH-g-SEBS, where the maleic anhydride group improved the compatibility of SEBS with PPE/PS/$TiO_2$ matrices. The maleic anhydride may increase the polarity of the EB block and may potentially react with PPE molecules and the coating on $TiO_2$ particle surface. In addition, MAH-IM5 is compatible with other non-functionalized SEBS (for example, IM1 (G1651), IM4 G1652)) and can function as compatibilizer for the non-functionalized SEBS. The better compatibility of FG1901 to PPE/PS/TiO2 matrices may also hinder rubber coalescence and the formation of lamellar rubber phase morphology. The low impact strength of C.Ex.1-2 are primarily due to lower rubber concentration in IM2 (A1535), IM3 (A1536). The low impact strength of C.Ex.4 was attributed to the lower SEBS content. Ex.2 and Ex.3 showed higher impact strength than C.Ex.3, and was attributed to MAH-IM5 (FG1901) having better compatibility with the polymer matrices than IM4 (G1652). The relatively lower impact strength of Ex.1 compared to Ex.2 -3 was attributed to high melt viscosity IM1 (G1651). IM1 may not have been well-dispersed in the resin because of its higher viscosity, and may not have been well-dispersed to form a rubber phase for effective impact modification.

Table 5. Properties.

| | C.Ex.1 | C.Ex.2 | C.Ex.3 | C.Ex.4 | Ex.1 | Ex.2 | Ex.3 |
|---|---|---|---|---|---|---|---|
| MFR, g/10min | 10 | 13 | 14 | 13 | 8 | 14 | 11 |
| Tensile modulus, MPa | 2586 | 2508 | 2299 | 2523 | 2214 | 2093 | 2082 |
| Tensile strength, MPa | 65.4 | 62.5 | 55 | 61.7 | 58.7 | 54.9 | 56.6 |
| Tensile Elongation, break, % | 21.0 | 13.9 | 52.8 | 60.3 | 20.3 | 57.4 | 75.9 |
| Notched Izod impact, kJ/$m^2$ | 6.6 | 9.1 | 23.7 | 13.5 | 18.5 | 43 | 36 |
| HDT (0.45MPa), °C | 173 | 175 | 172 | 173 | 172 | 172 | 172 |
| Dk (1.9Ghz) | 3.0 | 3.0 | 3.0 | 3.0 | 3.0 | 3.0 | 3.0 |
| Df (1.9GHz) | 0.001 | 0.001 | 0.001 | 0.001 | 0.001 | 0.001 | 0.001 |
| Bubbling Observed | × | × | Δ | Δ | ○ | ○ | ○ |

Table 6 shows the same effect of MAH-IM5 (FG1901) on improved impact strength and resistance to bubbling for examples Ex.4 and Ex.5.

Table 6. Formulations and physical properties

| | C.Ex.5 | Ex.4 | Ex. 5 | C.Ex.6 |
|---|---|---|---|---|
| PPE2 | 74 | 70 | 70 | 67 |
| MAH-IM5 | | 8 | 6 | 12 |
| IM1 | 4 | | | |
| GPPS | 20 | 20 | 22 | 19 |
| Additives | 2 | 2 | 2 | 2 |
| **Results** | | | | |
| MVR, $cm^3$/10min | 9 | 18 | 14 | 15 |
| Tensile modulus, MPa | 2600 | 2300 | 2510 | 1798 |
| Tensile strength, MPa | 77 | 64 | 74 | 55 |
| Tensile Elongation, break, % | 9 | 13 | 10.5 | 24 |
| Notched Izod impact, kJ/$m^2$ | 5.6 | 26 | 5.4 | 71 |
| HDT (0.45MPa), °C | 165 | 161 | 161 | 159 |
| Dk (1.9Ghz) | 2.6 | 2.6 | 2.6 | 2.6 |

(continued)

| Results | | | | |
|---|---|---|---|---|
| Df (1.9GHz) | 0.001 | 0.001 | 0.001 | 0.001 |
| Bubbling Observed | × | ○ | ○ | × |

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims. It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

## Claims

**1.** A thermoplastic composition comprising:

a. from about 20 wt. % to about 80 wt. % of a polyphenylene ether (PPE);
b. from about 1 wt. % to about 30 wt. % of a polystyrene resin; and
c. from about 0.01 wt. % to about 10 wt. % of a chemically reactive impact modifier;
wherein the combined weight percent value of all components does not exceed 100 wt. %, and all weight percent values are based on the total weight of the composition, and
wherein the composition is resistant to bubbling.

**2.** The thermoplastic composition of claim 1, wherein the composition further comprises a titanium oxide, a titanate, or a combination thereof.

**3.** The thermoplastic composition of claim 1, wherein the composition further comprises from about 0.01 wt. % to about 50 wt. % of a titanium oxide, a titanate, or a combination thereof.

**4.** The thermoplastic composition of any one of claims 1-3, comprising from about 2 wt. % to about 10 wt. % of the impact modifier.

**5.** The thermoplastic composition of any one of claims 1-4, wherein the composition comprises from greater than 40 wt. % to about 80 wt. % of the PPE.

**6.** The thermoplastic composition of any one of claims 1-5, wherein the PPE comprises poly(2,6-dimethyl-1,4-phenylene ether).

7. The thermoplastic composition of any one of claims 1-6, wherein the PPE has an intrinsic viscosity of about 0.3 dl/g to 0.5 dl/g when determined at about 25 °C in chloroform using a viscometer.

8. The thermoplastic composition according to any one of claims 1-7, wherein the polystyrene resin is a general purpose polystyrene or high impact polystyrene.

9. The thermoplastic composition of any one of claims 1-8, wherein chemically reactive impact modifier comprises a styrenic block copolymer grafted with at least one functional group.

10. The thermoplastic composition of claim 9, wherein the at least one functional group comprises a carboxylic acid, acid anhydride, glycidyl group, or a derivative thereof, grafted to the at least one block copolymer.

11. The thermoplastic composition of claim 9, wherein the unhydrogenated or hydrogenated block copolymer comprises a styrene-butadiene-styrene (SBS) copolymer, styrene-ethylene- butylene -styrene (SEBS) copolymer, styrene-isoprene-styrene (SIS) copolymer, styrene-ethylene-propylene-styrene (SEPS) copolymer, or a styrene-[ethylene-(ethylene-propylene)]-styrene (SEEPS) copolymer.

12. The thermoplastic composition of any one of claims 1-11, wherein the chemically reactive impact modifier comprises maleic anhydride grafted SEBS (MAH-g-SEBS).

13. The thermoplastic composition of any one of claims 1-12, wherein the chemically reactive impact modifier has a melt viscosity of less than 100 Pa·s when measured in accordance with ISO11443 at a temperature of 310°C, and shear rate of $1000s^{-1}$.

14. The thermoplastic composition according to any one of claims 1-13, wherein the thermoplastic composition further comprises at least one additional additive, wherein the at least one additional additive comprises an acid scavenger, anti-drip agent, antioxidant, antistatic agent, chain extender, colorant, de-molding agent, flow promoter, lubricant, mold release agent, plasticizer, quenching agent, flame retardant, UV reflecting additive, or a combination thereof.

15. An article formed from a composition, wherein the article is a component of a phase shifter for a base station, and the thermoplastic composition comprises:

a. from about 20 wt. % to about 80 wt. % of a polyphenylene ether (PPE);
b. from about 1 wt. % to about 30 wt. % of a polystyrene resin; and
c. from about 0.01 wt. % to about 10 wt. % of a chemically reactive impact modifier;

wherein the combined weight percent value of all components does not exceed 100 wt. %, and all weight percent values are based on the total weight of the composition, and wherein the composition is resistant to bubbling.

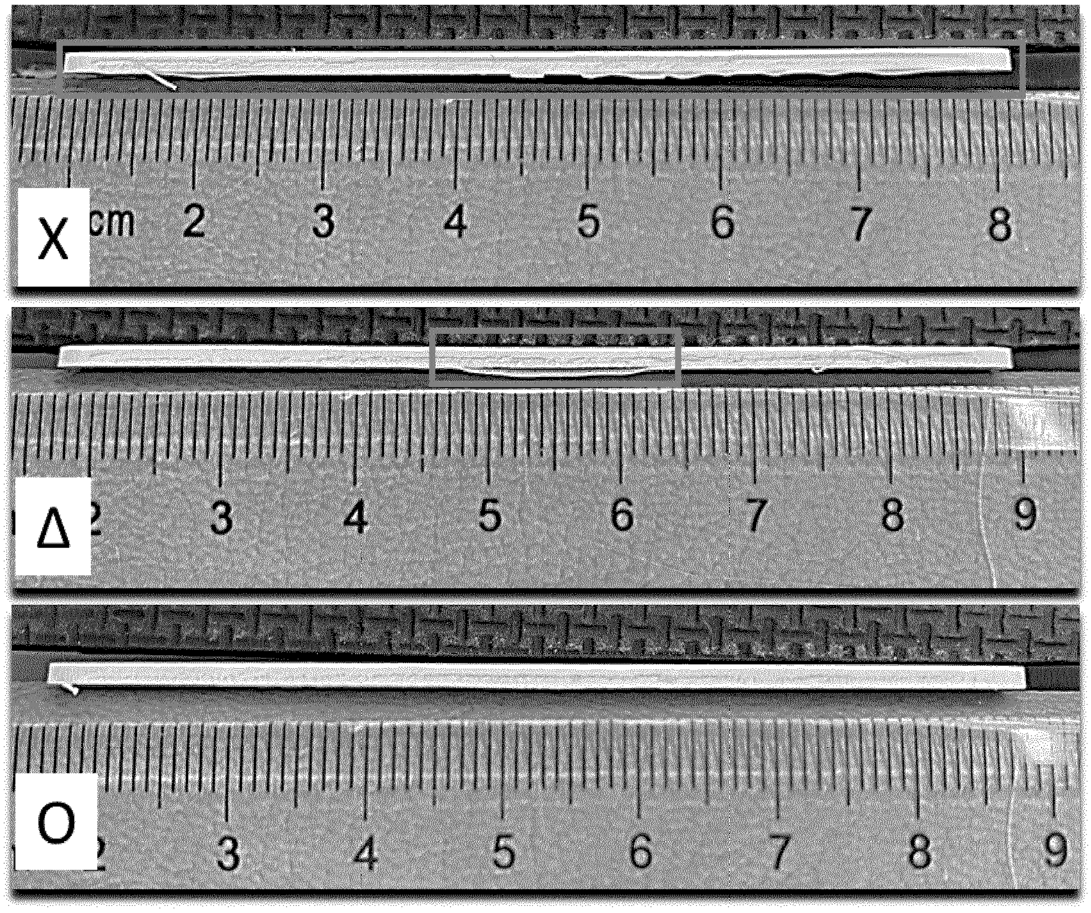


FIG. 1

Europäisches Patentamt
European Patent Office
Office européen des brevets

# EUROPEAN SEARCH REPORT

Application Number
EP 23 17 6292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 101 805 508 A (UNIV BEIJING CHEMICAL; NANTONG XINGCHEN SYNTHETIC MATERIAL CO LTD) 18 August 2010 (2010-08-18) | 1,4-15 | INV. C08L71/12 |
| Y | * examples 1-4,6-7 * ----- | 2,3 | |
| Y | WO 2021/186252 A1 (SHPP GLOBAL TECH BV [NL]) 23 September 2021 (2021-09-23) * claim 1; examples 1,5 * ----- | 2,3 | |
| | | | TECHNICAL FIELDS SEARCHED (IPC) |
| | | | C09J<br>C08L |

The present search report has been drawn up for all claims

1

| Place of search | Date of completion of the search | Examiner |
|---|---|---|
| The Hague | 21 August 2023 | Bezard, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 17 6292

This annex lists the patent family members relating to the patent documents cited in the above-mentioned European search report. The members are as contained in the European Patent Office EDP file on
The European Patent Office is in no way liable for these particulars which are merely given for the purpose of information.

21-08-2023

| Patent document cited in search report | Publication date | Patent family member(s) | Publication date |
|---|---|---|---|
| CN 101805508 A | 18-08-2010 | NONE | |
| WO 2021186252 A1 | 23-09-2021 | CN 115315460 A | 08-11-2022 |
| | | EP 4121475 A1 | 25-01-2023 |
| | | JP 2023517699 A | 26-04-2023 |
| | | KR 20220155567 A | 23-11-2022 |
| | | US 2023174781 A1 | 08-06-2023 |
| | | WO 2021186252 A1 | 23-09-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 4019590 A1
- US 10557035 B2
- US 10633537 B2
- WO 2019186400 A1